# EUROPEAN PATENT APPLICATION

(11) **EP 4 539 039 A1**
(43) Date of publication of application: **16.04.2025**
(21) Application number: 24202674.8
(22) Date of filing: 25.09.2024
(51) Int. Cl.: G10K 15/08, A63F 13/54, H04S 3/00

(54) **A METHOD FOR DECORRELATING A SET OF SIMULATED AUDIO SIGNALS IN A VIRTUAL ENVIRONMENT**

(30) Priority: 09.10.2023 GB 202315486
(71) Applicant: Sony Interactive Entertainment Europe Limited, London W1F 7LP (GB)
(72) Inventor: JONES, Michael Lee, London, W1F 7LP (GB); BUCHANAN, Christopher George, London, W1F 7LP (GB); ARMSTRONG, Calum, London, W1F 7LP (GB); SMITH, Alexei Ashton Derek, London, W1F 7LP (GB); MANIKA, Maria Pilataki, London, W1F 7LP (GB)
(74) Representative: Gill Jennings & Every LLP

(57) **Abstract**

Described herein is a computer-implemented method for decorrelating a set of simulated audio signals in a virtual environment, the method comprising: obtaining (102) a set of decorrelation filters; determining (104) a set of simulated audio signals to be decorrelated; selecting (106) a subset of decorrelation filters from the set of decorrelation filters which are suitable for decorrelating the set of simulated audio signals, wherein the selection is based on a computed combination metric, the combination metric comprising a measure of decorrelation provided by a combination of filters within the set of decorrelation filters; and applying (108) the selected subset to the simulated audio signals.

## Description

### FIELD OF THE INVENTION

Disclosed herein is a method for decorrelating a set of simulated audio signals in a virtual environment. More specifically, a method for selecting decorrelation filters for use in decorrelating a set of simulated audio signals in a virtual environment, such as a video game environment, is disclosed.

### BACKGROUND

Modern virtual environments, such as video game environments, are programmed such that physical phenomena that occur in reality are closely replicated in simulations. These Interactive virtual environments combine audio and video to simulate the experience of immersive exploration of a three-dimensional virtual world, by rendering the environment as perceived from the viewpoint of an observer moving under real-time control by the user. Simulating a realistic perception of sound by the observer in the virtual environment is essential to provide an immersive experience, in which aural cues marry to the visual experience of the environment. Therefore, simulating the acoustics and determining how sound propagates through the environment is a crucial task.

Simulation of sound propagation involves simulating reflections of an audio signal emitted from an audio source as it propagates along a multitude of propagation paths to a receiver and is reflected from surfaces within the virtual environment. There are a number of methods of simulating sound propagation in virtual environments. The propagation of sound from a source to a receiver can be considered in three components: (1) direct sound, representing the earliest arriving and strongest sound wave, (2) early reflections describing low order reflections arriving in an initial time period, for example in the first ~50 ms, where individual paths can be distinguished by the human ear, and (3) late reverberation, representing the sound when it has undergone many reflections and the human ear is no longer able to distinguish individual reflections.

The accurate simulation of early reflections is important as this is the component that proves the listener with most of the spatial information about an environment and so is crucial in adapting the user's experience of the sound to the specific virtual environment. Early reflections are usually calculated by geometric methods by explicitly computing linear propagation paths between a source and receiver, with vertices on surfaces in the virtual environment. The delay and attenuation can then be computed for each propagation path and the combination of these effects applied to an input audio signal to provide the simulated sound wave arriving at the receiver.

One issue with simulating early reflections is that generating multiple reflections of the same signal often results in undesired phase artifacts in the audio output. In particular, the playback of multiple copies of the same signal with slightly differing delays causes constructive and destructive interference, resulting in a "whooshing" sound as the receiver moves around in the virtual environment. This can be distracting for a user and detracts from the immersive experience of the virtual environment.

Accordingly there is a need for an improved method of simulating the propagation of audio signals in the virtual environment in which these undesired phasing artefacts are reduced.

### SUMMARY OF INVENTION

In an aspect of the present invention there is provided a computer-implemented method for decorrelating a set of simulated audio signals in a virtual environment, the method comprising: obtaining a set of decorrelation filters; determining a set of simulated audio signals to be decorrelated; selecting a subset of decorrelation filters from the set of decorrelation filters which are suitable for decorrelating the set of simulated audio signals, wherein the selection is based on a computed combination metric, the combination metric comprising a measure of decorrelation provided by a combination of filters within the set of decorrelation filters; and applying the selected subset to the simulated audio signals.

In this way, the subset of filters that are selected and applied are the most suitable to be used for decorrelating the audio signals. The selected and applied subset of decorrelation filters may be maximally different from each other compared to other possible subsets of filters, which may instead be randomly selected. In various embodiments, the original set of decorrelation filters may be randomly generated. For example, 36 decorrelation filters may be obtained or generated, and 6 of these may be selected to form the subset. In various embodiments, a plurality of possible subsets may be selected from the set of decorrelation filters. The most suitable subset in the plurality may then be applied to the simulated audio signals.

Preferably, the computed combination metric comprises a measure of cross-correlation between a combination of filters within the set. In this way, the suitability of the subset of decorrelation filters can be quantified. More specifically, the similarity between combinations of decorrelation filters within the set can be quantified. It has been found that combinations of decorrelation filters that are dissimilar to each other, in other terms that have the lowest cross-correlation scores, are most effective at decorrelating simulated audio signals.

Additionally or alternatively, the computed combination metric may comprise a measure of the average modulus phase delay between the simulated audio signals. The average modulus phase delay may also be weighted by the amplitude of the reflection of the simulated audio signals. Decorrelation filters that produce an average modulus phase delay of approximately 0.5 radians, or 0.25 wavelengths, between interfering simulated audio signals would be suitable for decorrelating these simulated audio signals as a path length difference of 0.25 wavelengths is between perfect constructive and destructive interference on average.

In various embodiments, the computed combination metric at least in part based on one or more properties of the set of simulated audio signals to be decorrelated.

Preferably, the properties of the set audio signals comprises delay between the audio signals.

In this way, the selected subset of decorrelation filters can be most suited to decorrelating a particular set of simulated audio signals. For example, in a scenario where a simulated audio signal has reflected off a single surface in the video game environment, producing a delay of 5 ms between the incident audio signal and the reflected audio signal, a particular decorrelation filter may be effective at decorrelating these audio signals. However, the same decorrelation filter may be ineffective at decorrelating these audio signals if the delay is 10 ms, for example. Other properties of the set of simulated audio signals may include frequency, duration, and/or amplitude of the individual audio signals in the set.

In various embodiments, the method further comprises: a preceding step of computing a combination metric for different combinations of decorrelation filters in the set of decorrelation filters. In this way, the set of decorrelation filters can be analysed to determine which combinations of decorrelation filters are most suitable for being applied to the simulated audio signals. The combination metric indicates which filters in the larger set are most suitable by quantifying to what degree filters will decorrelate the audio signals. In various embodiments, multiple different metrics may be computed.

Preferably, the selection of the subset of decorrelation filters is made at run time based on the combination metric. In this way, the combination metric informs the video game engine to select a subset of filters when the video game is being run. In alternative embodiments, selection of the subset may be made offline, prior to runtime.

Preferably, the step of computing a combination metric for different combinations of decorrelation filters in the set of decorrelation filters is carried out offline, prior to runtime. In various scenarios, the computation step may be a computationally expensive process. It is therefore advantageous to perform this step prior to running of the video game to avoid latencies.

Preferably, the method further comprises a step of storing subsets of decorrelation filters based on the combination metric for use at runtime. In this way, the subset of decorrelation filters can be called when the video game is being run. There is therefore no requirement to continuously regenerate the subset.

Preferably, the method further comprises: storing the computed combination metric for use at runtime of a video game; and selecting a subset of decorrelation filters at runtime based on the stored combination metrics. In this way, when the video game is being run, the combination metric can be used to select the most suitable subset of decorrelation filters. The combination metric can be called when the video game is being run and this can be used to select the subset of decorrelation filters from the larger set.

Preferably, computing the combination metric comprises comparing decorrelation filters in the set to determine which combinations of decorrelation filters in the set are most effective at decorrelating a specific set of simulated audio signals. In this way, decorrelation filters that are similar to each other can be removed from selection as they are deemed not suitable for use.

Preferably, computing the combination metric comprises determining the cross-correlation between a combination of decorrelation filters in the set. In this way, the degree of similarity between the decorrelation filters can be quantified. As described above, it has been found that combinations of decorrelation filters that are dissimilar to each other, in other terms that have the lowest cross-correlation scores, are most effective at decorrelating simulated audio signals.

Preferably, the combination of decorrelation filters in the set with the lowest cross-correlation scores are selected to form the subset of decorrelation filters. In this way, only the decorrelation filters that are maximally different from each other form the selected subset.

Preferably, determining the cross-correlation between each of the decorrelation filters in the set comprises building a table of cross-correlation values across all combinations of the decorrelation filters in the set. In this way, all of the filters in the original large set of decorrelation filters are compared with each other.

In various embodiments, the computed combination metric comprises a measure of inefficacy of decorrelation provided by a combination of filters within the set of decorrelation filters. In this way, unsuitable combinations of decorrelation filters can be discarded.

Preferably, computing the combination metric comprises comparing decorrelation filters in the set to determine which combinations of decorrelation filters are least effective at decorrelating a specific set of simulated audio signals. In this way, the decorrelation filters can be analysed to determine which combinations of filters are least suitable for being applied to the simulated audio signals. The least suitable filters will not form part of the selected subset.

Preferably, the method further comprises: storing the combinations of decorrelation filters in the set that are least effective at decorrelating a specific set of simulated audio signals; and removing decorrelation filters in the subset that include the stored combinations of decorrelation filters that are least effective at decorrelating a specific set of simulated audio signals. In this way, once it is determined which combinations of decorrelation filters are not suitable, they will not be selected to from the subset in future. More preferably, the method further comprises: storing the combinations of decorrelation filters in the set that are least effective at decorrelating a specific set of simulated audio signals; and replacing decorrelation filters in the subset that include the stored combinations of decorrelation filters that are least effective at decorrelating a specific set of simulated audio signals. In this way, unsuitable combinations of decorrelation filters can be replaced with suitable combinations of decorrelation filters.

In various embodiments, the set of decorrelation filters comprises a plurality of subsets of decorrelation filters. In this way, the most suitable subset is selected from a group of possible subsets. For example, the set of decorrelation filters may comprise for groups of six decorrelation filters. The multiple subsets of decorrelation filters may be randomly generated.

Preferably, a combination metric is computed for each of the subsets in the plurality to determine which of the subsets is most effective at decorrelating a specific set of simulated audio signals. In this way, the most effective subset is selected out of a possible group of subsets. For example, one subset of the four subsets in the set may be selected. Preferably, the most effective subset in the plurality of subsets is applied to the simulated audio signals.

The method may further include an initial step of simulating reflections of an input audio signal within the virtual environment to determine a plurality of audio paths between the source and receiver, wherein the set of simulated audio signals to be decorrelated comprises the propagation of the input audio signal along a plurality of the determined audio paths. The simulation of the reflections may comprise using the image source method or using a ray tracing method to determine the plurality of audio paths.

In another aspect of the invention there is provided a computer-implemented method of simulating the propagation of an audio signal between a source and receiver in a virtual environment, the method comprising: simulating reflections of an audio signal within the virtual environment to determine a plurality of audio paths between the source and receiver; determining an input audio signal to be propagated between the source and receiver by the plurality of audio paths to provide a set of simulated audio signals to be decorrelated; obtaining a set of decorrelation filters; selecting a subset of decorrelation filters from the set of decorrelation filters which are suitable for decorrelating the set of simulated audio signals, wherein the selection is based on a computed combination metric, the combination metric comprising a measure of decorrelation provided by a combination of filters within the set of decorrelation filters; and applying the selected subset to the simulated audio signals. This aspect may include any of the features described under the first aspect alone or in combination.

In another aspect of the invention there is provided a video gaming system comprising a processor configured to perform the methods described herein.

In another aspect of the invention there is provided a computer program comprising instructions that when executed by a computer perform the methods described herein.

In accordance with the embodiments described herein, the decorrelation filters may comprise one or more of the following: the decorrelation filters may alter the phases of the audio signals in the set of simulated audio signals; the decorrelation filters may maintain the amplitudes of the audio signals in the set of simulated audio signals; the decorrelation filters may comprise a set of all-pass filters; the decorrelation filters may comprise a frequency selecting variable that selects the frequencies in the set of simulated audio signals to be filtered and a phase delay variable that determines the maximum phase that the selected frequencies are to be delayed.

### BRIEF DESCRIPTION OF DRAWINGS

Embodiments of the invention will now be described, by way of example, by reference to the drawings, in which:
Figure 1 is a flow sequence diagram of a method for decorrelating a set of simulated audio signals in a virtual environment in an embodiment of the invention;
Figure 2A is a flow sequence diagram of a method for decorrelating a set of simulated audio signals in a virtual environment in another embodiment of the invention;
Figure 2B is a flow sequence diagram of a method for selecting a subset of decorrelation filters for use in decorrelating a set of simulated audio signals in a virtual environment in another embodiment of the invention; and
Figure 3 is a flow sequence diagram of a method for decorrelating a set of simulated audio signals in a virtual environment in another embodiment of the invention.

### DETAILED DESCRIPTION

The simulation of early reflections in a virtual environment is particularly important as this provides the listener with majority of the spatial information about an environment. This is because of the relatively high strengths, recognisable directionalities, and distinct arrival times of the early reflections. In contrast, in the late reverberation phase when the sound has reflected from many surfaces in the environment, the impulse response resembles an exponentially decaying noise function with such a high density, the ear is no longer able to distinguish individual reflections such that usually statistical methods are used to model the late reverberation of an audio signal.

Geometric methods are generally used to simulate early reflections, where "early reflections" are generally considered those arriving in the first 20 - 70 milliseconds of the audio being admitted. These generally involve low order reflections such as first, second and possibly third-order reflections from acoustically reflective surfaces within the virtual environment. Simulation methods use one of a number of different methods to determine propagation paths between the source and receiver within the virtual environment. Then, for each of these propagation paths, a delay can be calculated, for example relative to a primary propagation path representing the most direct and earliest arriving sound wave at the receiver, which is generally of the greatest intensity.

There are a number of well-known methods for determining the propagation paths between a source and receiver in a virtual environment. These include image source methods that involve computing specular reflection paths by considering virtual sources generated by mirroring the location of the audio source over each reflective surface of the environment. Other methods include ray-tracing methods which find propagation paths between a source and receiver by generating rays emanating from the source position and following them through the environment until an appropriate set of rays has been found reaching a receiver position. Beam tracing methods determine propagation paths from a source by recursively tracing pyramidal beams (sets of rays) through the environment.

Irrespective of the method, once the propagation paths have been determined the effects of the paths are combined into a filter that is applied to a source audio signal. This involves modelling the attenuation and scattering of sound as it travels along each path which, depending on the complexity of the simulation, may take into account source emission patterns, distance attenuation, atmospheric scattering, reflectance functions, diffraction models and receiver sensitivity. The combined effects of the paths are applied as a filter to the source signal to simulate the audio arrive at receiver location.

As described above, when multiple reflections of the same signal generated with different delays there are phase artefacts or "comb filtering" in the audio signal, which become particularly apparent as a receiver moves around in the virtual environment. One way of addressing this issue is to apply a set of decorrelation filters to the set of simulated audio signals, where the set of simulated audio signals correspond to the propagation of an input audio signal along each of the determined paths.

To further illustrate the issue at present, if two identical wide-band (white noise) audio signals were to interfere with each other, wherein a delay of 0.5 ms is present between the two, destructive interference may be observed at 1 kHz, 3kHz, 5kHZ, 7kHz, 9kHz etc. If a third copy of the audio signal delayed by 1/6 ms were to interfere, destructive interference may also be observed at 3kHz, 9kHZ, 15kHz. These two delays create an undesirable level of destructive interference as the frequencies of destructive interference align.

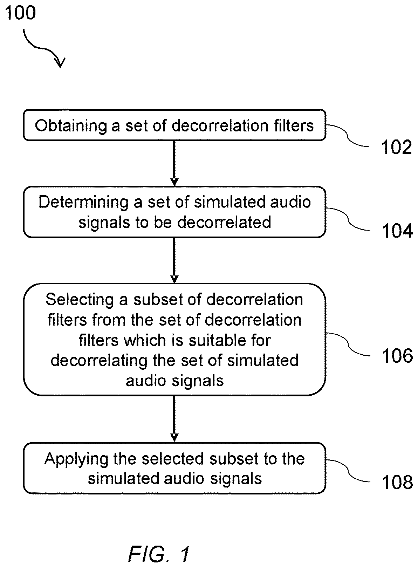

Figure 1 is a flow sequence diagram of a method 100 in an embodiment of the invention. The method 100 comprises obtaining a set of decorrelation filters at step 102. At step 104, a set of simulated audio signals to be decorrelated is determined. The set of simulated audio signals may correspond to a plurality of simulated audio paths between a source and receiver within the virtual environment. At step 106, a subset of decorrelation filters from the set of decorrelation filters which is suitable for decorrelating the set of simulated audio signals is selected. At step 108, the selected subset is applied to the simulated audio signals.

In this embodiment, obtaining a set of decorrelation filters at step 102 comprises randomly generating a large number of decorrelation filters. For example, 36 filters may be generated to provide a filter for each of a plurality of propagation paths corresponding to all second order reflections. This may take place offline, prior to runtime, with the decorrelation filters stored for use during runtime. Due to the random generation of the filters, some of the filters in the set may be dissimilar to each other. On the other hand, some of the filters in the set may be similar to each other. A subset of the generated filters, formed of six filters for example, that are similar to each other, would not be very effective at decorrelating the simulated audio signals.

At step 104, a set of simulated audio signals to be decorrelated is determined. The set of simulated audio signals is determined from simulated audio signals within the video game environment. As described above, the set of simulated audio signals may correspond to a set of determined audio paths along which an input audio signal propagates in the virtual environment between a source and a receiver. The audio paths may be determined based on an image source method, or by ray tracing methods. The audio paths have differing delay values relative to a primary audio path (the most direct path between the source and receiver). Since the same audio signal is propagated along these paths, having slight differing delay values, there can be interference between the different paths which can lead to comb filtering effects that are detrimental to the user experience of the audio environment. The effects are particularly noticeable where the delay values are close to a half wavelength of a dominant frequency in the input audio signal. The method reduces these affects by the application of the appropriate decorrelation filters. The set of simulated audio signals may be for example the audio paths corresponding to the first order reflections (i.e., single reflections from each of six reflective surface boundaries within the virtual environment).

At step 106, a subset of decorrelation filters from the set of decorrelation filters which is suitable for decorrelating the set of simulated audio signals is selected. This involves selecting a certain subset of the overall bank of filters for use. In the above example of first order reflections, it would involve selecting 6 of the possible 36 filters. As described above, certain combinations of these, possibly randomly generated filters, will not provide effective decorrelation. For example they may shift one of the audio paths by a delay value which brings it into constructive interference with the primary audio path - or a combination of filters may shift two or more paths such as to bring them into interference. Therefore, the selection of filters is based on a computed combination metric, the combination metric comprising a measure of decorrelation provided by a combination of filters within the set of decorrelation filters. In this way, a subset of filters is selected such that they provide effective correlation. The combination metric may be based purely on the filters, or it may be based both on the filters and the specific input simulated audio signal, for example based on the audio content of the audio signal. In this embodiment, the computed combination metric comprises a measure of cross-correlation between a combination of filters within the set. Cross-correlation is a measure of how similar decorrelation filters are to each other. If the measure of cross-correlation between decorrelation filters indicates that the filters are dissimilar to each other, then the combination metric will indicate that the filters are suitable for decorrelating the simulated audio signals and can therefore be selected to form part of the subset.

In this embodiment, the computed combination metric at least in part based on the delay between audio signals within the set of simulated audio signals to be decorrelated. A particular decorrelation filter in the set may be effective at decorrelating audio signals with a delay between them of 5 ms, but not 10 ms, for example. In a scenario where this filter has been selected to form part of the subset as the measure of cross-correlation between decorrelation filters indicates that this filter is dissimilar others, this filter may not in fact be suitable for decorrelating the simulated audio signals and therefore should not form part of the subset. The combination metric will indicate that this particular decorrelation is not suitable for being applied to the simulated audio signals. This depends on the delay between simulated audio signals. Only the most suitable decorrelation filters in the set are selected to form the subset, therefore.

At step 108, the selected subset is applied to the simulated audio signals to decorrelate the audio signals. For example, where there are six audio signals to be decorrelated (e.g., corresponding to first order reflections in the audio environment) a suitable subset of six decorrelation filters of the original 36 decorrelation filters will be applied to the simulated audio signals.

Additionally, or alternatively, in certain embodiments, the selected subset is applied directly to audio signals emitted from virtual loudspeakers located within the virtual environment. Within the virtual environment, a number of virtual loudspeakers may be placed in various locations and orientations relative to the receiver. Audio signals emitted from these loudspeakers toward the receiver may therefore have different path lengths. If the selected subset is applied directly to audio signals emitted from virtual loudspeakers, artefacts at the receiver due to interference resulting from the path length differences can be reduced.

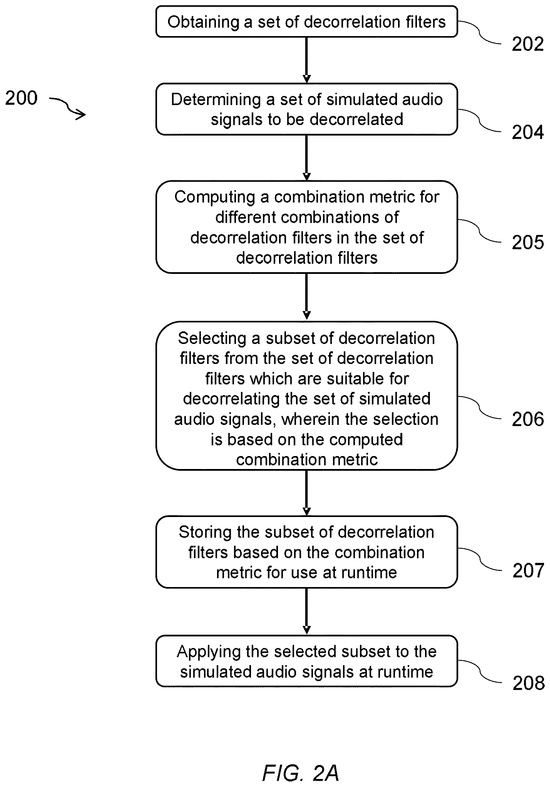

Figure 2A is a flow sequence diagram of a method 200 in another embodiment of the invention. Step 202 of the method 200 comprises obtaining a set of decorrelation filters. Step 204 comprises determining a set of simulated audio signals to be decorrelated. Step 205 comprises computing a combination metric for different combinations of decorrelation filters in the set of decorrelation filters. Step 206 comprises selecting a subset of decorrelation filters from the set of decorrelation filters which are suitable for decorrelating the set of simulated audio signals, wherein the selection is based on the computed combination metric. Step 207 comprises storing subsets of decorrelation filters based on the combination metric for use at runtime. Step 208 comprises applying the selected subset to the simulated audio signals at runtime.

At step 202, a set of decorrelation filters is obtained. Obtaining the set of decorrelation filters at step 202 may comprise randomly generating a large number of decorrelation filters, in the manner described in step 102 of the embodiment of the invention according to Figure 1.

In this embodiment, each decorrelation filter in the randomly generated set includes a frequency selecting variable and a phase delay variable. When the set of decorrelation filters is randomly generated, the frequency selecting variable and the phase delay variable are each randomly generated for each decorrelation filter in the set. The frequency selecting variable indicates the frequency or the frequencies for which the decorrelation filter is to apply. The phase delay variable determines to what degree the filter is to induce a frequency delay on the frequency or the frequencies indicated by the frequency selecting variable. In alternative embodiments, the randomly generated set of decorrelation filters may comprise other types of filters that are randomly generated. For example, the randomly generated set of decorrelation filters may comprise high pass, low pass and/or band pass filters that are each randomly generated. Alternatively, any all-pass filter generation method may be used to provide the randomly generated set of decorrelation filters.

At step 204, a set of simulated audio signals to be decorrelated is determined. The set of simulated audio signals may be determined in the manner described in step 104 of the embodiment of the invention according to Figure 1.

At step 205, a combination metric for different combinations of decorrelation filters in the set of decorrelation filters is computed. The decorrelation filters are analysed and compared to determine which combinations of decorrelation filters are likely to be most effective at decorrelating the determined audio signals. More specifically, computing the combination metric comprises determining the cross-correlation between cross-correlation filters in the set. Computing the combination metric may also comprise taking into account the amount of delay between the interfering simulated audio signals, and potentially other properties of the audio signals, such as the audio content. The combination metric may therefore provide a measure of the decorrelation of a set of filters based on the specific frequencies present in the audio signal, such as a dominant frequency of an input audio signal or a frequency of a prominent audio feature.

The combination metric computed at step 205 may comprise the same features as the combination described in relation to step 106 of the embodiment of the invention according to Figure 1. In this embodiment, the step of computing a combination metric for different combinations of decorrelation filters in the set of decorrelation filters is carried out offline, prior to runtime of the video game. In alternative embodiments, computing the combination metric may be carried out at runtime. In various embodiments, the method 200 may additionally comprise storing the computed combination metric for use at runtime of the video game. The stored computed combination metric can be used at runtime of the video game to select a suitable subset of decorrelation filters. The computed combination metric may be stored in a memory device of a video game console, for example.

In various embodiments, computing the combination metric may comprise calculating a measure of inefficacy of decorrelation provided by a combination of filters within the set of decorrelation filters. More specially computing the combination metric comprises comparing decorrelation filters in the set to determine which combinations of decorrelation filters are least effective at decorrelating a specific set of simulated audio signals. Filters that are deemed to be least effective can then be discarded. These discarded filters will not make up part of the possible subsets in step 206. Combinations of decorrelation filters in the set that are least effective at decorrelating a specific set of simulated audio signals may be stored so that they are not used at runtime of the video game. The least effective combinations may be stored in a memory device of a video game console, for example.

At step 206, a subset of decorrelation filters from the set of decorrelation filters which are suitable for decorrelating the set of simulated audio signals is selected, wherein the selection is based on the computed combination metric. The computed combination metric indicates which combinations of filters are most suitable for decorrelating the simulated audio signals.

In various embodiments, the selection of the subset of decorrelation filters is made at run time based on the combination metric. In alternative embodiments, the selection of the subset may occur prior to runtime of the video game. In embodiments of the invention where the computed combination metric is stored for use at runtime of the video game, a subset of decorrelation filters may be selected at runtime based on the stored combination metrics.

At step 207, the subset of decorrelation filters based on the combination metric for use at runtime is stored. The subset may be stored in a memory device of a video game console, for example. In alternative embodiments, the subset of decorrelation filters may not be stored, and the subset may be selected at runtime of the videogame.

At step 208, the selected subset is applied to the simulated audio signals at runtime.

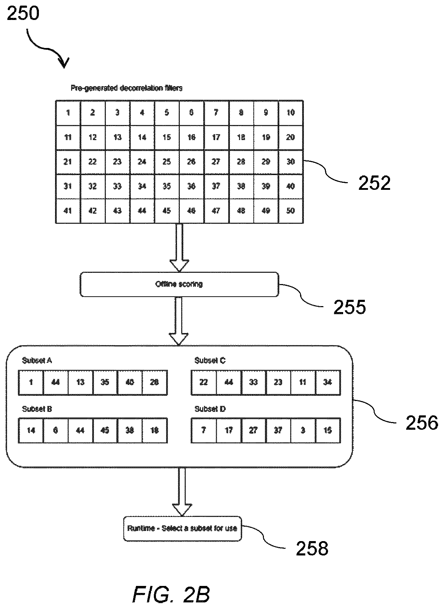

Figure 2B is a flow sequence diagram of a method 250 in another embodiment of the invention. The method 250 may be carried out as part of the method 200 of the embodiment of the invention according to Figure 2A, for example. Step 252 of the method 250 comprises progenerating a set of decorrelation filters. Step 255 comprises offline scoring, for example calculating the combination metric for different combinations of the filters within the full set of decorrelation filters 252. Step 256 comprises forming possible subsets, A, B, C, D, of decorrelation filters and step 258 comprises selecting a subset for use at runtime.

At step 252, a set of decorrelation filters are pre-generated. More specifically, 50 decorrelation filters are randomly generated. Each of the randomly generated decorrelation filters are labelled. As shown in Figure 2B, the filters are simply sequentially labelled 1 to 50. Due to the random generation of the filters, some of the filters in the set may be very dissimilar to each other. On the other hand, some of the filters in the set may be very similar to each other. In various embodiments, a plurality of subsets of subsets of decorrelation filters may be pre-generated. For example, four groups of six decorrelation filters may be pre-generated. Some of these subsets may share similar or the same decorrelation filters.

Step 255 comprises offline scoring of the pre-generated decorrelation filters. The offline scoring comprises determining a combination metric which can be used to select the most suitable filters from the 50 generated for decorrelating simulated audio signals. In this embodiment, computing the combination metric comprises comparing each of the 50 decorrelation filters in the set to determine which combinations of decorrelation filters are most dissimilar to each other. In other terms, which combinations of filters in the set are most effective at decorrelating a specific set of simulated audio signals.

More specifically, the cross-correlation between each of the of decorrelation filters in the set is computed. This can be done by building a table of cross-correlation values across all combinations of the 50 decorrelation filters in the set. A cross-correlation score for every possible combination of filters can then be computed. The combinations of filters with the lowest scores can then be extracted from the table to form the subset.

In various embodiments, computing the combination metric may comprise calculating a measure of inefficacy of decorrelation provided by a combination of filters within the set of decorrelation filters. More specially computing the combination metric comprises comparing decorrelation filters in the set to determine which combinations of decorrelation filters are least effective at decorrelating a specific set of simulated audio signals. Filters that are deemed to be least effective can then be discarded. These discarded filters will not make up part of the possible subsets in step 256. Combinations of decorrelation filters in the set that are least effective at decorrelating a specific set of simulated audio signals may be stored so that they are not used in future. Combinations of decorrelation filters in the set that are least effective at decorrelating a specific set of simulated audio signals may be replaced with more effective combinations of decorrelation filters.

At step 256, four possible subsets, A, B, C, D, of decorrelation filters are formed. The four possible subsets are formed from the 50 generated filters based on the calculated combination metric. In alternative embodiments, any number of possible subsets may be formed. For example, only one possible subset will be formed based on the combination metric and this subset will be the one that is selected to be applied to the simulated audio signals. In various embodiments, the multiple possible subsets may be formed at least in part based on properties of the simulated audio signals in the video game environment.

In this embodiment, the four possible subsets A, B, C, D are formed by combining filters such that the total cross correlation score resulting from combining individual cross correlation scores from each possible pairing of filters within the possible subset is minimised. In other terms, the total cross correlation score is the sum of the cross-correlation scores from each possible pairing of filters within the possible subset. For example, given Subset A of Figure 2B, which comprises decorrelation filters 1, 44, 13, 35, 40 and 28, the total cross correlation score resulting from each possible pairing of filters within Subset A (1/44 + 1//13 + 1/35... + 44/13 +44/35...) is minimised. The filters 1, 44, 13, 35, 40 and 28 in Subset A are therefore calculated to be maximally dissimilar to each other.

In embodiments where combinations of decorrelation filters in the set that are least effective are stored, decorrelation filters in the possible subsets that include the stored combinations of decorrelation filters that are least effective may be removed so that these filters do not form part of the possible subsets.

At step 258, one of the four possible subsets is selected at runtime for use. The possible subset with the lowest overall cross-correlation score is selected to be applied to the simulated audio signals. For example, subset A may be selected, with subsets B, C and D discarded as their cross-correlation scores indicate that they are not suitable for decorrelating the simulated audio signals.

In various embodiments, a subset from the multiple possible subsets is selected at least on part based on properties of the simulated audio signals. Multiple possible subsets can be formed at 256, which may be suitable for use in decorrelating the simulated audio signals. However, the final selection of a subset at runtime may depend on properties of the audio signals in the video game environment at runtime.

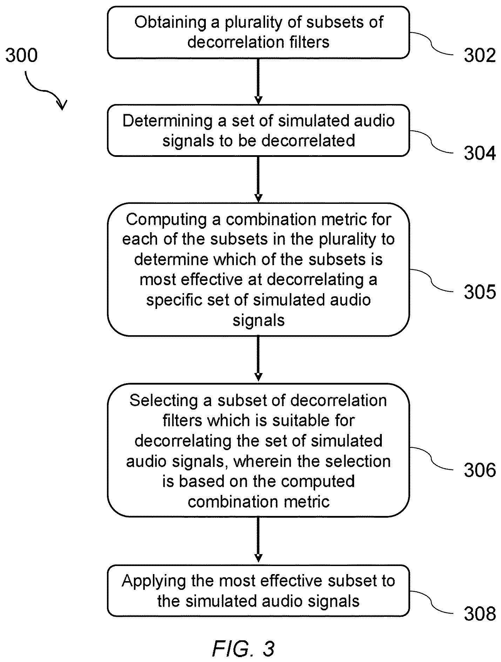

Figure 3 is a flow sequence diagram of a method 300 in another embodiment of the invention. Step 302 comprises obtaining a plurality of subsets of decorrelation filters. Step 304 comprises determining a set of simulated audio signals to be decorrelated. Step 305 comprises computing a combination metric for each of the subsets in the plurality to determine which of the subsets is most effective at decorrelating a specific set of simulated audio signals. Step 306 comprises selecting a subset of decorrelation filters which are suitable for decorrelating the set of simulated audio signals, wherein the selection is based on the computed combination metric. Step 308 comprises applying the most effective subset to the simulated audio signals.

At step 302, a plurality of subsets of decorrelation filters is obtained. For example, four groups of six decorrelation filters may be obtained. In various embodiments, the plurality of subsets of filters may be randomly generated. Some of the subsets may share similar or the same decorrelation filters.

At step 304, a set of simulated audio signals to be decorrelated is determined. The set of simulated audio signals may be determined in the manner described in step 104 of the embodiment of the invention according to Figure 1.

At step 305, a combination metric for each of the subsets in the plurality to determine which of the subsets is most effective at decorrelating a specific set of simulated audio signals is determined. The decorrelation filters within each of the four subsets are compared to each other determine an overall combination metric for each of the four subsets. More specifically, the cross-correlation between each of the filters in each of the four subsets is calculated. The subset with the lowest overall cross-correlation is the subset comprising the most dissimilar filters. This subset is likely to be most effective at decorrelating the simulated audio signals.

At step 306, a subset of decorrelation filters which is suitable for decorrelating the set of simulated audio signals is selected, wherein the selection is based on the computed combination metric. The subset with the lowest overall cross-correlation is selected out of the four subsets originally generated. This selection may occur offline, prior to runtime of the video game. The selected subset is then stored for use at runtime.

At step 308, the most effective subset is applied to the simulated audio signals.

## Claims

1. A computer-implemented method for decorrelating a set of simulated audio signals in a virtual environment, the method comprising:
obtaining a set of decorrelation filters;
determining a set of simulated audio signals to be decorrelated;
selecting a subset of decorrelation filters from the set of decorrelation filters which are suitable for decorrelating the set of simulated audio signals, wherein the selection is based on a computed combination metric, the combination metric comprising a measure of decorrelation provided by a combination of filters within the set of decorrelation filters; and
applying the selected subset to the simulated audio signals.

2. A computer-implemented method according to claim 1, wherein the computed combination metric comprises a measure of cross-correlation between a combination of filters within the set.

3. A computer-implemented method according to any preceding claim, wherein the computed combination metric at least in part based on one or more properties of the set of simulated audio signals to be decorrelated, wherein preferably the properties of the set audio signals comprises delay between audio signals.

4. A computer-implemented method according to any preceding claim, the method further comprising:
a preceding step of computing a combination metric for different combinations of decorrelation filters in the set of decorrelation filters, wherein preferably the selection of the subset of decorrelation filters is made at run time based on the combination metric.

5. A computer-implemented method according to claim 4, wherein the step of computing a combination metric for different combinations of decorrelation filters in the set of decorrelation filters is carried out offline, prior to runtime, preferably further comprising a step of storing subsets of decorrelation filters based on the combination metric for use at runtime.

6. A computer-implemented method according to claim 5, wherein the method further comprises:
storing the computed combination metric for use at runtime of a video game; and
selecting a subset of decorrelation filters at runtime based on the stored combination metrics.

7. A computer-implemented method according to any of claims 4 to 6, wherein computing the combination metric comprises comparing decorrelation filters in the set to determine which combinations of decorrelation filters in the set are most effective at decorrelating a specific set of simulated audio signals.

8. A computer-implemented method according to claim 7, wherein computing the combination metric comprises determining the cross-correlation between a combination of decorrelation filters in the set, wherein preferably the combination of decorrelation filters in the set with the lowest cross-correlation scores are selected to form the subset of decorrelation filters.

9. A computer-implemented method according to claim 8, wherein determining the cross-correlation between each of the decorrelation filters in the set comprises building a table of cross-correlation values across all combinations of the decorrelation filters in the set.

10. A computer-implemented method according to any preceding claim, wherein the computed combination metric comprises a measure of inefficacy of decorrelation provided by a combination of filters within the set of decorrelation filters.

11. A computer-implemented method according to claim 10, wherein computing the combination metric comprises comparing decorrelation filters in the set to determine which combinations of decorrelation filters are least effective at decorrelating a specific set of simulated audio signals, wherein preferably the method further comprises:
storing the combinations of decorrelation filters in the set that are least effective at decorrelating a specific set of simulated audio signals; and
removing decorrelation filters in the subset that include the stored combinations of decorrelation filters that are least effective at decorrelating a specific set of simulated audio signals.

12. A computer-implemented method according to any preceding claim, wherein the set of decorrelation filters comprises a plurality of subsets of decorrelation filters.

13. A computer-implemented method according to claim 12, wherein a combination metric is computed for each of the subsets in the plurality to determine which of the subsets is most effective at decorrelating a specific set of simulated audio signals, wherein preferably the most effective subset in the plurality is applied to the simulated audio signals.

14. A video gaming system comprising a processor configured to perform the method of any preceding claim.

15. A computer program comprising instructions that when executed by a computer perform the method of any preceding claim.
